# EUROPEAN PATENT APPLICATION

(11) **EP 3 016 463 A1**
(43) Date of publication of application: **04.05.2016**
(21) Application number: 14818811.3
(22) Date of filing: 12.06.2014
(51) Int. Cl.: H04W 72/04

(54) **COMMUNICATION CONTROL METHOD**

(30) Priority: 26.06.2013 JP 2013133656; 26.06.2013 JP 2013133660
(71) Applicant: Kyocera Corporation, Kyoto-shi, Kyoto 612-8501 (JP)
(72) Inventor: MORITA, Kugo, Kyoto-shi Kyoto 612-8501 (JP); YAMAZAKI, Chiharu, Kyoto-shi Kyoto 612-8501 (JP); MATSUMOTO, Naohisa, Kyoto-shi Kyoto 612-8501 (JP); ADACHI, Hiroyuki, Kyoto-shi Kyoto 612-8501 (JP); FUJISHIRO, Masato, Kyoto-shi Kyoto 612-8501 (JP); FUKUTA, Noriyoshi, Kyoto-shi Kyoto 612-8501 (JP)
(74) Representative: Schwabe - Sandmair - Marx
(86) International application number: PCT/JP2014/065600
(87) International publication number: WO 2014/208351

(57) **Abstract**

A communication control method comprises: a setting step of setting, by an eNB 200-1 which manages a first cell, radio resources consisting of a portion of resource blocks of the plurality of resource blocks as an ePDCCH region for transmitting a downlink control signal in the first cell, in at least one of the plurality of subframes; a transmitting step of transmitting, by the eNB 200-1, ePDCCH information indicating the ePDCCH region to an eNB 200-2 which manages a second cell; and a receiving step of receiving, by the eNB 200-2, the ePDCCH information.

## Description

### Technical Field

The present invention relates to a communication control method for use in a mobile communication system into which a new carrier type is introduced.

### Background Art

In LTE (Long Term Evolution) with specifications designed in 3GPP (3rd Generation Partnership Project) which is a project aiming to standardize a mobile communication system, radio resources are configured by a plurality of subframes divided in a time direction, and each of the plurality of subframes includes a plurality of resources blocks divided in a frequency direction (for example, see Non Patent Document 1).

As a downlink carrier type of LTE, each of a plurality of subframes is provided with a physical downlink control channel (PDCCH) region for transmitting a downlink control signal. Specifically, the PDCCH region is a region disposed over all resource blocks, in an interval of several symbols in the head of a subframe.

In 3GPP, it has been studied to introduce a new carrier type (NCT) different from a conventional carrier type.

### PRIOR ART DOCUMENT

### NON-PATENT DOCUMENT

Non Patent Document 1: 3GPP technical report "TS 36.300 V11.5.0" March 2013

### SUMMARY OF THE INVENTION

As one of the NCTs, it is conceivable to set radio resources consisting of a portion of resource blocks of the plurality of resource blocks included in a subframe, as an ePDCCH (enhanced PDCCH) region for transmitting a downlink control signal, with respect to at least one subframe.

However, in the current specification, there is a problem that a mechanism for appropriately handling an ePDCCH region is not present.

Accordingly, an object of the present invention is to provide a communication control method capable of handling an ePDCCH region appropriately.

### MEANS OF SOLVING THE PROBLEMS

A communication control method according to a first aspect is used in a mobile communication system in which a radio frame is configured by a plurality of subframes divided in a time direction and each of the plurality of subframes includes a plurality of resource blocks divided in a frequency direction. The communication control method comprises: a setting step of setting, by a first base station which manages a first cell, radio resources consisting of a portion of resource blocks of the plurality of resource blocks as an ePDCCH region for transmitting a downlink control signal in the first cell, in at least one of the plurality of subframes; a transmitting step of transmitting, by the first base station, ePDCCH information indicating the ePDCCH region to a second base station which manages a second cell; and a receiving step of receiving, by the second base station, the ePDCCH information.

A communication control method according to a second aspect is used in a mobile communication system in which a radio frame is configured by a plurality of subframes divided in a time direction and each of the plurality of subframes includes a plurality of resource blocks divided in a frequency direction. The communication control method comprises: a setting step of setting, by a base station which manages a cell, radio resources consisting of a portion of resource blocks of the plurality of resource blocks as an ePDCCH region for transmitting a downlink control signal in the cell, in at least one of the plurality of subframes; a transmitting step of transmitting, by the base station, identification information associated with the ePDCCH region; and a specifying step of specifying, by a user terminal which is in an idle state in the cell, the ePDCCH region on the basis of the identification information after reception of the identification information.

A communication control method according to a third aspect is used in a mobile communication system in which a radio frame is configured by a plurality of subframes divided in a time direction and each of the plurality of subframes includes a plurality of resource blocks divided in a frequency direction. The communication control method comprises: a setting step of setting, by a base station which manages a cell, radio resources consisting of a portion of resource blocks of the plurality of resource blocks as a common ePDCCH region for transmitting a common downlink control signal in the cell, in at least one of the plurality of subframes.

According to the present invention, it can provide a communication control method, a base station, and a user terminal which are capable of handling an ePDCCH region appropriately.

### BRIEF DESCRIPTION OF THE DRAWINGS

[Fig. 1] Fig. 1 is a diagram illustrating a configuration of an LTE system according to a first embodiment to a sixth embodiment.
[Fig. 2] Fig. 2 is a block diagram of a UE according to a first embodiment to a sixth embodiment.
[Fig. 3] Fig. 3 is a block diagram of an eNB according to a first embodiment to a sixth embodiment.
[Fig. 4] Fig. 4 is a protocol stack diagram of radio interface according to a first embodiment to a sixth embodiment.
[Fig. 5] Fig. 5 is a configuration diagram of a radio frame according to a first embodiment to a sixth embodiment.
[Fig. 6] Fig. 6 is a diagram for describing an application scene 1 of an ePDCCH.
[Fig. 7] Fig. 7 is a diagram for describing an application scene 2 of an ePDCCH.
[Fig. 8] Fig. 8 is a diagram for describing an ePDCCH region notification method with respect to a neighboring eNB, according to a first embodiment.
[Fig. 9] Fig. 9 is a diagram for describing a configuration example 2 of ePDCCH information according to a first embodiment.
[Fig. 10] Fig. 10 is a diagram for describing a utilization example of ePDCCH information according to a first embodiment.
[Fig. 11] Fig. 11 is a diagram for describing operation patterns 1 and 2 according to a first embodiment.
[Fig. 12] Fig. 12 is a diagram for describing an operation pattern 3 according to a first embodiment.
[Fig. 13] Fig. 13 is a diagram for describing an operation pattern 4 according to a first embodiment.
[Fig. 14] Fig. 14 is a diagram for describing an operation pattern 4 according to a first embodiment.
[Fig. 15] Fig. 15 is a diagram for describing a setting pattern of an ePDCCH region according to a third embodiment.
[Fig. 16] Fig. 16 is a diagram for describing a setting pattern of an ePDCCH region according to a third embodiment.
[Fig. 17] Fig. 17 is a diagram for describing a setting pattern of an ePDCCH region according to a third embodiment.
[Fig. 18] Fig. 18 is a diagram for describing a configuration example 1 of ePDCCH information according to a third embodiment.
[Fig. 19] Fig. 19 is a diagram for describing a configuration example 2 of ePDCCH information according to a third embodiment.
[Fig. 20] Fig. 20 is a diagram for describing a configuration example 2 of ePDCCH information according to a third embodiment.
[Fig. 21] Fig. 21 is a diagram for describing a utilization example of ePDCCH information according to a third embodiment.
[Fig. 22] Fig. 22 is a flowchart of an updating method 1 of an ePDCCH region according to a fourth embodiment.
[Fig. 23] Fig. 23 is a flowchart of an updating method 2 of an ePDCCH region according to a fourth embodiment.
[Fig. 24] Fig. 24 is a sequence diagram illustrating a general handover procedure.
[Fig. 25] Fig. 25 is an operation flowchart of an eNB according to a fifth embodiment.
[Fig. 26] Fig. 26 is an operation flowchart of an eNB according to a fifth embodiment.
[Fig. 27] Fig. 27 is a diagram for describing an operation pattern 1 of an eNB according to a sixth embodiment.
[Fig. 28] Fig. 28 is a diagram for describing an operation pattern 2 of an eNB according to a sixth embodiment.
[Fig. 29] Fig. 29 is a diagram for describing an operation pattern 3 of an eNB according to a sixth embodiment.
[Fig. 30] Fig. 30 is a diagram for describing an operation pattern 3 of an eNB according to a sixth embodiment.
[Fig. 31] Fig. 31 is a diagram for describing an operation pattern 4 of an eNB according to a sixth embodiment.

### DESCRIPTION OF THE EMBODIMENT

### [Overview of Embodiment]

A communication control method according to an embodiment is used in a mobile communication system in which a radio frame is configured by a plurality of subframes divided in a time direction and each of the plurality of subframes includes a plurality of resource blocks divided in a frequency direction. The communication control method comprises: a setting step of setting, by a first base station which manages a first cell, radio resources consisting of a portion of resource blocks of the plurality of resource blocks as an ePDCCH region for transmitting a downlink control signal in the first cell, in at least one of the plurality of subframes; a transmitting step of transmitting, by the first base station, ePDCCH information indicating the ePDCCH region to a second base station which manages a second cell; and a receiving step of receiving, by the second base station, the ePDCCH information.

In the embodiment, in the transmitting step, when updating setting of the ePDCCH region, the first base station transmits the ePDCCH information indicating the ePDCCH region after updating to a second base station.

In the embodiment, the ePDCCH information includes resource identification information of radio resources set as the ePDCCH region.

In the embodiment, the ePDCCH region includes a common region for transmitting a common downlink control signal in the first cell. The ePDCCH information includes resource identification information of radio resources set as the common region.

In the embodiment, the ePDCCH region includes an individual region for transmitting a downlink control signal for an individual user terminal. The ePDCCH information includes resource identification information of radio resources set as the individual region.

In the embodiment, the ePDCCH region includes a plurality of sub-regions resulting from division according to error tolerance required for a user terminal that is a transmission destination of the downlink control signal. The ePDCCH information includes resource identification information of each of the plurality of sub-regions.

In the embodiment, the communication control method further comprises a step of updating, by the first base station, setting of the ePDCCH region, according to a change in a number of user terminals accommodated in the first cell or a change in an error tolerance required for a user terminal accommodated in the first cell.

In the embodiment, the communication control method further comprises a step of setting, by the second base station, an ePDCCH region for transmitting a downlink control signal in the second cell on the basis of the ePDCCH information.

In the embodiment, the communication control method further comprises a step of receiving, by the first base station, a request for a handover of a user terminal from the second cell to the first cell from the second base station. In the transmitting step, when responding to the request for the handover, the first base station transmits the ePDCCH information to the second base station.

In the embodiment, the communication control method further comprises a step of notifying, by the second base station, the user terminal of the ePDCCH information when transmitting an instruction of a handover to the first cell to the user terminal.

A communication control method according to an embodiment is used in a mobile communication system in which a radio frame is configured by a plurality of subframes divided in a time direction and each of the plurality of subframes includes a plurality of resource blocks divided in a frequency direction. The communication control method comprises: a setting step of setting, by a base station which manages a cell, radio resources consisting of a portion of resource blocks of the plurality of resource blocks as an ePDCCH region for transmitting a downlink control signal in the cell, in at least one of the plurality of subframes; a transmitting step of transmitting, by the base station, identification information associated with the ePDCCH region; and a specifying step of specifying, by a user terminal which is in an idle state in the cell, the ePDCCH region on the basis of the identification information after reception of the identification information.

In the embodiment, the communication control method further comprises an establishing step of establishing, by the user terminal, a connection with the cell by receiving the downlink control signal transmitted in the ePDCCH region.

In the embodiment, the identification information is information identifying radio resources set as the ePDCCH region. In the transmitting step, the base station transmits system information including the identification information. In the specifying step, the user terminal specifies radio resources identified by the identification information as the ePDCCH region after receiving the identification information included in the system information.

In the embodiment, the identification information is information identifying the cell. In the transmitting step, the base station transmits a synchronization signal including the identification information or a reference signal mapped according to the identification information. In the specifying step, the user terminal specifies radio resources calculated from the identification information obtained by the synchronization signal or the reference signal as the ePDCCH region.

In the embodiment, the identification information is information identifying radio resources set as the ePDCCH region. In the transmitting step, the base station transmits the identification information in a head symbol of a subframe in which the ePDCCH region set. In the specifying step, the user terminal specifies radio resources identified by the identification information as the ePDCCH region after receiving the identification information transmitted in the head symbol.

In the embodiment, the identification information is a flag for specifying the ePDCCH region. In the transmitting step, the base station transmits the identification information at a specific position in the ePDCCH region. In the specifying step, the user terminal specifies the ePDCCH region according to a position of the identification information after receiving the identification information in the ePDCCH region.

A communication control method according to an embodiment is used in a mobile communication system in which a radio frame is configured by a plurality of subframes divided in a time direction and each of the plurality of subframes includes a plurality of resource blocks divided in a frequency direction. The communication control method comprises: a setting step of setting, by a base station which manages a cell, radio resources consisting of a portion of resource blocks of the plurality of resource blocks as a common ePDCCH region for transmitting a common downlink control signal in the cell, in at least one of the plurality of subframes.

In the embodiment, the common ePDCCH region is an ePDCCH region for transmitting only the common downlink control signal in the cell.

In the embodiment, the communication control method further comprises: a transmitting step of transmitting, by the base station, a master information block including identification information associated with the common ePDCCH region; and a specifying step of specifying, by a user terminal which is in an idle state in the cell, the common ePDCCH region on the basis of the identification information after reception of the identification information included in master information block.

In the embodiment, the communication control method further comprises a transmitting step of transmitting, by the base station, the common downlink control signal in the cell, while changing a transmission directivity applied to the common ePDCCH region.

In the embodiment, in the setting step, the base station sets, as the common ePDCCH region, radio resources consisting of a first resource block and a second resource block disposed spaced apart from the first resource block in a frequency direction, in at least one of the plurality of subframes.

In the embodiment, in the setting step, the base station changes resource blocks set as the common ePDCCH region such that the common ePDCCH region is subjected to frequency hopping for each subframe by a predetermined hopping pattern.

In the embodiment, each of the plurality of subframes includes a first slot and a second slot divided in a time direction. In the setting step, the base station makes resource blocks to be set as the common ePDCCH region different in the first slot and the second slot.

### [First Embodiment]

Hereinafter, a description will be provided for an embodiment in a case where the present invention is applied to an LTE system.

### (System Configuration)

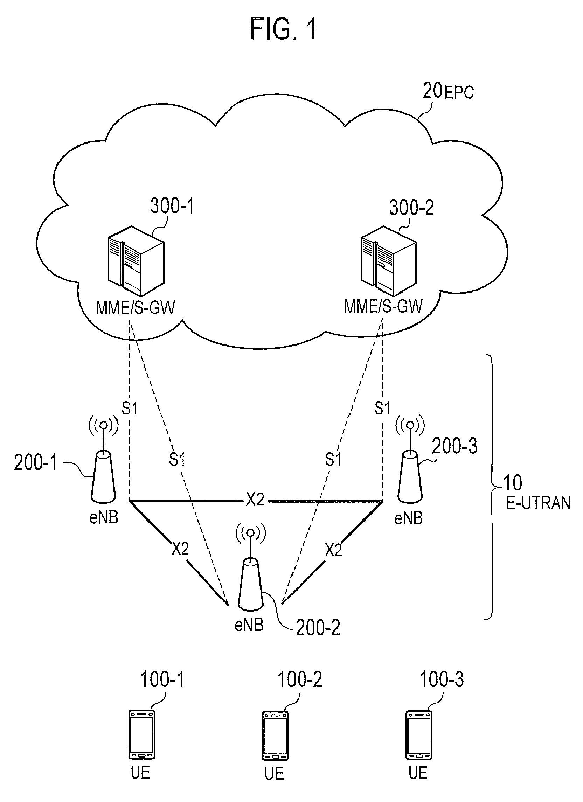

Fig. 1 is a configuration diagram of an LTE system according to the first embodiment. As illustrated in Fig. 1, the LTE system includes UEs (User Equipment) 100, EUTRAN (Evolved Universal Terrestrial Radio Access Network) 10, and EPC (Evolved Packet Core) 20.

The UE 100 corresponds to a user terminal. The UE 100 is a mobile communication device and performs radio communication with a connecting cell (serving cell). A configuration of the UE 100 will be described below in detail.

The E-UTRAN 10 corresponds to a radio access network. The E-UTRAN 10 includes eNBs 200 (evolved Node-B). The eNB 200 corresponds to a base station. The eNBs 200 are connected to one another via an X2 interface. A configuration of the eNB 200 will be described below in detail.

Each eNB 200 manages one or a plurality of cells and performs radio communication with the UE 100 which establishes a connection with the cell of the eNB 200. The eNB 200, for example, has a radio resource management (RRM) function, a routing function of user data, and a measurement control function for mobility control and scheduling. The "cell" is used as a term indicating a minimum unit of a radio communication area, and is also used as a term indicating a function of performing radio communication with the UE 100.

The EPC 20 corresponds to a core network. The E-UTRAN 10 and the EPC 20 configure a network of the LTE system. The EPC 20 includes a plurality of MME (Mobility Management Entity)/S-GWs (Serving-Gateway) 300. The MME performs various mobility controls and the like for the UE 100. The S-GW performs transfer control of user data. The MME/S-GW 300 is connected to eNB 200s via an S1 interface.

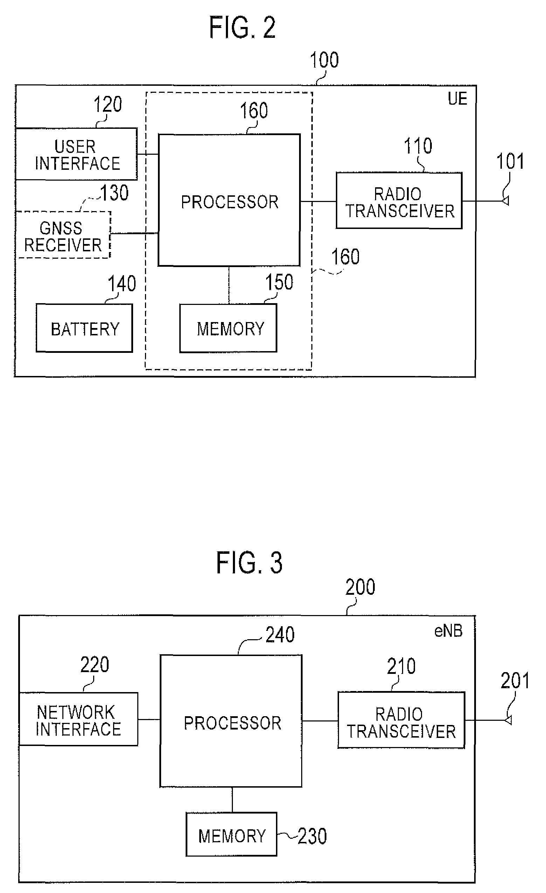

Fig. 2 is a block diagram of the UE 100. As illustrated in Fig. 2, the UE 100 includes a plurality of antennas 101, a radio transceiver 110, a user interface 120, a GNSS (Global Navigation Satellite System) receiver 130, a battery 140, a memory 150, and a processor 160. The memory 150 and the processor 160 configure a controller. The UE 100 may not have the GNSS receiver 130. Furthermore, the memory 150 may be integrally formed with the processor 160, and this set (that is, a chip set) may be called a processor 160' constituting a controller.

The plurality of antennas 101 and the radio transceiver 110 are used to transmit and receive a radio signal. The radio transceiver 110 converts a baseband signal (transmission signal) output from the processor 160 into the radio signal, and transmits the radio signal from the plurality of antennas 101. Furthermore, the radio transceiver 110 converts the radio signal received by the plurality of antennas 101 into the baseband signal (reception signal), and outputs the baseband signal to the processor 160.

The user interface 120 is an interface with a user carrying the UE 100, and includes, for example, a display, a microphone, a speaker, and various buttons. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various processes and various communication protocols, which will be described later.

Fig. 3 is a block diagram of the eNB 200. As illustrated in Fig. 3, the eNB 200 includes a plurality of antennas 201, a radio transceiver 210, a network interface 220, a memory 230, and a processor 240. The memory 230 and the processor 240 constitute a controller. It is noted that the memory 230 may be integrally formed with the processor 240, and this set (that is, a chip set) may be called a processor constituting a controller.

The plurality of antennas 201 and the radio transceiver 210 are used to transmit and receive a radio signal. The radio transceiver 210 converts a baseband signal (transmission signal) output from the processor 240 into the radio signal, and transmits the radio signal from the plurality of antennas 201. Furthermore, the radio transceiver 210 converts the radio signal received by the plurality of antennas 201 into the baseband signal (reception signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 executes various processes and various communication protocols, which will be described later.

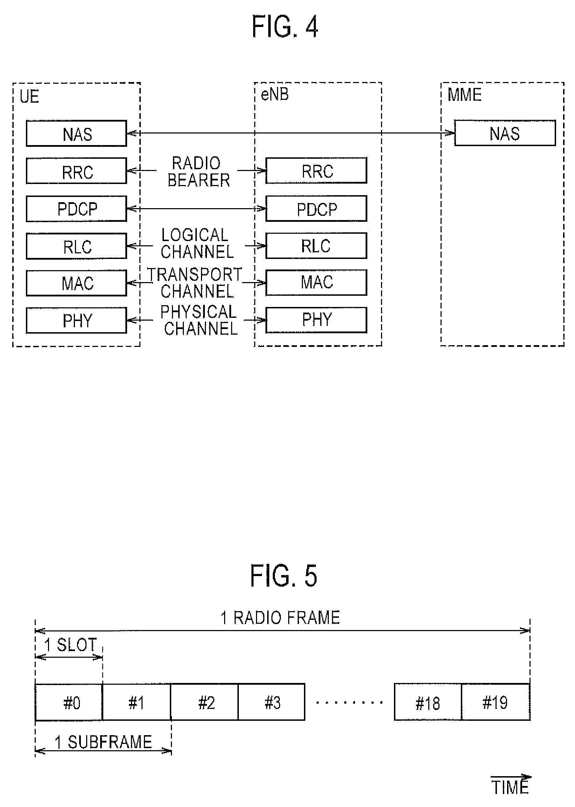

Fig. 4 is a protocol stack diagram of a radio interface in the LTE system. As illustrated in Fig. 4, the radio interface protocol is classified into a layer 1 to a layer 3 of an OSI reference model, wherein the layer 1 is a physical (PHY) layer. The layer 2 includes an MAC (Media Access Control) layer, an RLC (Radio Link Control) layer, and a PDCP (Packet Data Convergence Protocol) layer. The layer 3 includes an RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, user data and control signal are transmitted via the physical channel.

The MAC layer performs priority control of data, and a retransmission process and the like by hybrid ARQ (HARQ). Between the MAC layer of the UE 100 and the MAC layer of the eNB 200, user data and control signal are transmitted via a transport channel. The MAC layer of the eNB 200 includes a transport format of an uplink and a downlink (a transport block size and a modulation and coding scheme) and a scheduler for determining a resource block to be assigned to the UE100.

The RLC layer transmits data to an RLC layer of a reception side by using the functions of the MAC layer and the PHY layer. Between the RLC layer of the UE 100 and the RLC layer of the eNB 200, user data and control signal are transmitted via a logical channel.

The PDCP layer performs header compression and decompression, and encryption and decryption.

The RRC layer is defined only in a control plane dealing with a control signal. Between the RRC layer of the UE 100 and the RRC layer of the eNB 200, a control signal (an RRC message) for various types of setting is transmitted. The RRC layer controls the logical channel, the transport channel, and the physical channel in response to establishment, re-establishment, and release of a radio bearer. When there is an connection (RRC connection) between the RRC of the UE 100 and the RRC of the eNB 200, the UE 100 is in a connected state (an RRC connected state), and when there is no connection (no RRC connection), the UE 100 is in an idle state (an RRC idle state).

An NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As illustrated in Fig. 5, the radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RB) in a frequency direction, and a plurality of symbols in the time direction. Each resource block includes a plurality of subcarriers in the frequency direction. A radio resource unit is configured by one subcarrier and one symbol and one subcarrier.

Among radio resources allocated to the UE 100, a frequency resource can be configured by a resource block and a time resource can be configured by a subframe (or slot).

In the downlink, an interval of several symbols from the head of each subframe is a region used as a physical downlink control channel (PDCCH) for mainly transmitting a control signal. Furthermore, the other portion of each subframe is a region available as a physical downlink shared channel (PDSCH) for mainly transmitting user data.

In the uplink, both ends in the frequency direction of each subframe are regions used as a physical uplink control channel (PUCCH) for mainly transmitting a control signal. The central portion of each subframe is a region available as a physical uplink shared channel (PUSCH) for mainly transmitting user data.

### (NCT)

As described above, as a downlink carrier type of LTE, each of a plurality of subframes is provided with a PDCCH region for transmitting a downlink control signal. Specifically, the PDCCH region is a region disposed over all resource blocks, in an interval of several symbols in the head of a subframe.

Meanwhile, in 3GPP, it has been studied to introduce a new carrier type (NCT) different from the conventional carrier type. In carrier aggregation in which a plurality of component carriers (CC) is used for communication in an aggregated form, there are a case in which the NCT is applied to a primary component carrier (PCC) and a case in which the NCT is applied to a secondary component carrier (SCC).

The case in which the NCT is applied to a primary component carrier (PCC) is called a standalone NCT. In the first embodiment, the standalone NCT is mainly assumed.

In the first embodiment, with respect to at least one subframe, an eNB 200 sets radio resources consisting of a portion of resource blocks of the plurality of resource blocks included in the subframe, as an ePDCCH (enhanced PDCCH) region for transmitting a downlink control signal.

Unlike a conventional PDCCH region which is disposed over all resource blocks in one carrier (component carrier), the ePDCCH region is disposed only in some resource blocks. Also, unlike the conventional PDCCH region which is disposed only in an interval of several symbols in the head of a subframe, the ePDCCH region is capable of being disposed over all the symbols of the subframe.

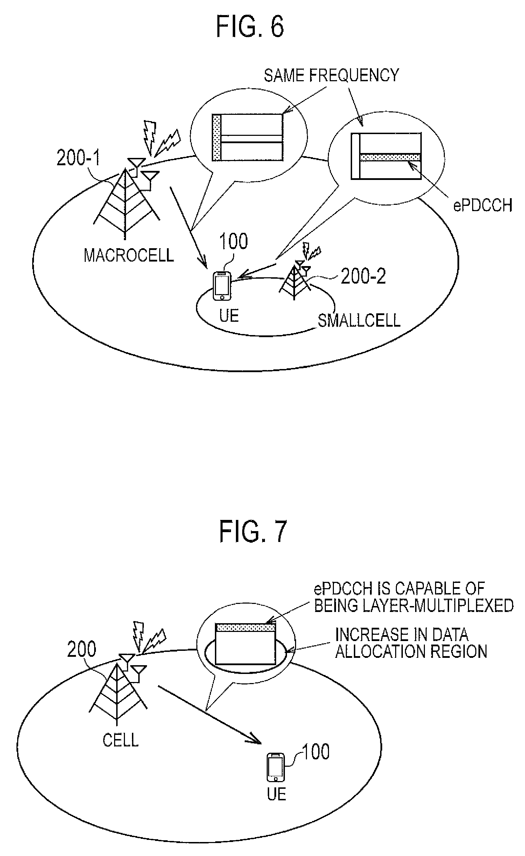

Fig. 6 is a diagram for describing an application scene 1 of an ePDCCH.

As illustrated in Fig. 6, an eNB 200-1 which manages macrocells sets a conventional PDCCH region. On the other hand, an eNB 200-2 which manages small cells sets an ePDCCH region according to an embodiment. The eNB 200-1 regulates use of radio resources corresponding to the ePDCCH region set by the eNB 200-2. Also, the eNB 200-2 regulates use of radio resources corresponding to the PDCCH region set by the eNB 200-1. Therefore, since it is possible to prevent occurrence of interference between the PDCCH region and the ePDCCH region, the eNB 200-2 which is subject to strong interference from the eNB 200-1 can transmit a downlink control signal a UE 100 within its own cell.

Fig. 7 is a diagram for describing an application scene 2 of an ePDCCH.

As illustrated in Fig. 7, an eNB 200 which manages cells sets an ePDCCH region. The eNB 200 spatially multiplexes (layer-multiplexes) the ePDCCH region and a PDSCH region by downlink multi-antenna transmission and transmits a downlink control signal to a UE 100 in the ePDCCH region. Therefore, it is possible to increase the PDSCH region to which downlink user data is allocated, compared to a conventional carrier.

### (ePDCCH region notification method with respect to neighboring eNB)

Next, an ePDCCH region notification method with respect to a neighboring eNB 200 according to a first embodiment will be described.

The ePDCCH region notification method includes a setting step of setting, by an eNB 200-1 (first base station) which manages a first cell, radio resources consisting of a portion of resource blocks of a plurality of resource blocks as an ePDCCH region for transmitting a downlink control signal in the first cell, in at least one of a plurality of subframes, a transmitting step of transmitting, by the eNB 200-1, ePDCCH information indicating the ePDCCH region to an eNB 200-2 (second base station) which manages a second cell, and a receiving step of receiving, by the eNB 200-2, the ePDCCH information. In the first embodiment, the second cell is adjacent to the first cell.

As described above, in the first embodiment, neighboring cells share information on the ePDCCH region, making it possible to set the ePDCCH region so as to avoid interference.

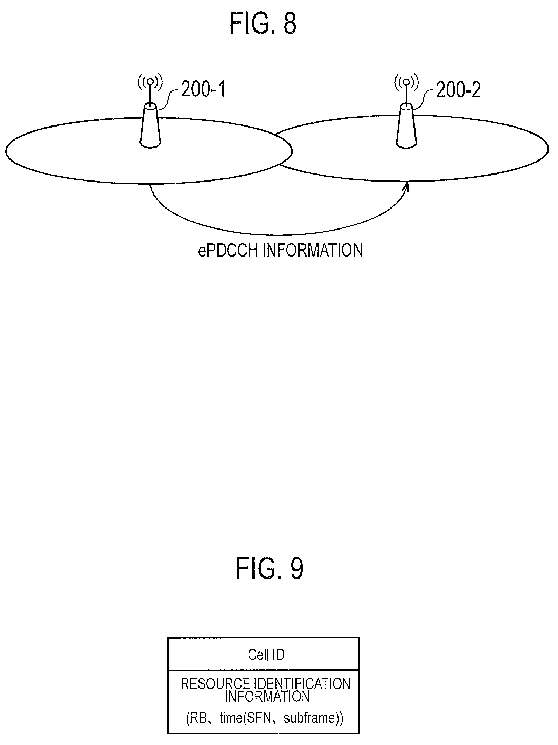

Fig. 8 is a diagram for describing an ePDCCH region notification method with respect a neighboring eNB, according to a first embodiment.

As illustrated in Fig. 8, an eNB 200-1 which manages a first cell sets an ePDCCH region for transmitting a downlink control signal in the first cell. The eNB 200-1 transmits ePDCCH information indicating the ePDCCH region to an eNB 200-2 which manages a second cell adjacent to the first cell. The ePDCCH information is transmitted on an X2 interface. The ePDCCH information may be an information element of an eNB Configuration Update message transmitted on the X2 interface. Alternatively, the ePDCCH information may be transmitted on an S1 interface. The eNB 200-2 transmits the ePDCCH information. Therefore, the eNB 200-2 can grasp the ePDCCH region set by the eNB 200-1 (first cell).

Fig. 9 is a diagram for describing a configuration example of ePDCCH information according to a first embodiment.

As illustrated in Fig. 9, the ePDCCH information includes an identifier (cell ID) of a first cell which sets an ePDCCH region and resource identification information of radio resources set as the ePDCCH region. The resource identification information includes identification information of frequency resources set as the ePDCCH region and identification information of time resources set as the ePDCCH region. The identification information of frequency resources may be, for example, a resource block number. The identification information of time resources may be, for example, a radio frame number (SFN: system frame number) and a subframe number.

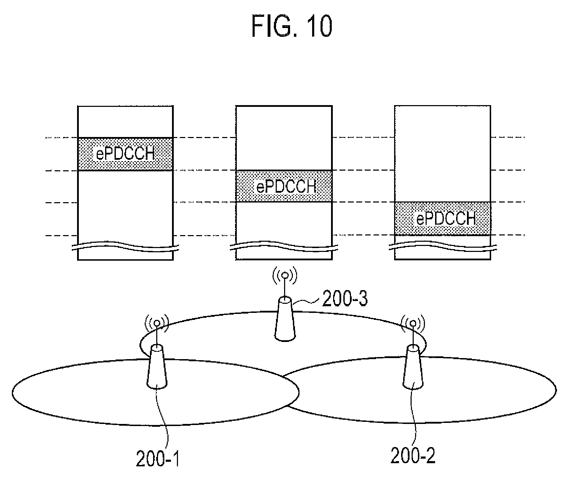

Fig. 10 is a diagram for describing a utilization example of ePDCCH information according to a first embodiment.

As illustrated in Fig. 10, there are disposed an eNB 200-1 which manages a first cell, an eNB 200-2 which manages a second cell adjacent to the first cell, and an eNB 200-3 which manages a third cell adjacent to the first cell and the second cell. Each eNB 200 transmits ePDCCH information on an ePDCCH region set by its own cell to another eNB 200. In addition, each eNB 200 sets radio resources, which do not overlap an ePDCCH region set by the another eNB 200-1, as the ePDCCH region for its own cell on the basis of the received ePDCCH information. In the example of Fig. 10, different resource blocks are set as ePDCCH regions in the same subframe for the eNBs 200. Therefore, it is possible to avoid interference of the ePDCCH region and successfully transmit a downlink control signal to each cell.

Each eNB 200 may update the ePDCCH region set by its own cell. For example, each eNB 200 updates radio resources set as the ePDCCH region. When updating setting of the ePDCCH region, each eNB 200 may transmit ePDCCH information indicating the ePDCCH region after updating to another eNB 200.

### (ePDCCH region notification method with respect to UE)

Next, an ePDCCH region notification method with respect to an UE 100 according to a first embodiment will be described.

The ePDCCH region notification method includes a setting step of setting, by an eNB 200 which manages a cell, radio resources consisting of a portion of resource blocks of a plurality of resource blocks as an ePDCCH region for transmitting a downlink control signal in the cell, in at least one of a plurality of subframes, a transmitting step of transmitting, by the eNB 200, identification information associated with the ePDCCH region (hereinafter, referred to as "ePDCCH identification information"), and a specifying step of specifying, by a UE 100 which is in an idle state in the cell, the ePDCCH region on the basis of the ePDCCH identification information after reception of the ePDCCH identification information. In the first embodiment, the UE 100 establishes connection with the cell by receiving a downlink control signal transmitted in the specified ePDCCH region.

As seen above, the UE 100 which is in the idle state in the cell (serving cell) can specify a position of the ePDCCH region, that is, radio resources set as an ePDCCH region on the basis of the ePDCCH identification information received from the serving cell. Then, the UE 100 can establish a connection with the cell by receiving a downlink control signal.

In the first embodiment, there are the following operation patterns 1 to 4 as a pattern to transmit ePDCCH identification information.

In the operation pattern 1, the ePDCCH identification information is information identifying radio resources set as an ePDCCH region. In the transmitting step, the eNB 200 transmits system information including the ePDCCH identification information. The system information is a master information block (MIB) or a system information block (SIB). In the specifying step, the UE 100 receives the ePDCCH identification information included in the system information, and thereafter, specifies radio resources identified by the ePDCCH identification information as an ePDCCH region.

In the operation pattern 2, the ePDCCH identification information is information identifying a cell (that is, cell ID). In the transmitting step, the eNB 200 transmits a synchronization signal including the cell ID or a reference signal mapped according to the cell ID. In the first embodiment, the synchronization signal is a primary synchronization signal (PSS) or a secondary synchronization signal (SSS). The reference signal is a cell-specific reference signal (CRS). In the specifying step, the UE 100 specifies radio resources calculated from the cell ID obtained by the synchronization signal or the reference signal as the ePDCCH region.

In the operation pattern 3, the ePDCCH identification information is information identifying radio resources set as an ePDCCH region. In the transmitting step, the eNB 200 transmits the ePDCCH identification information in a head symbol of a subframe in which the ePDCCH region is set. In the specifying step, the UE 100 receives the ePDCCH identification information transmitted in the head symbol, and thereafter, specifies radio resources identified by the ePDCCH identification information as an ePDCCH region.

In the operation pattern 4, the ePDCCH identification information is a flag for specifying an ePDCCH region (hereinafter, referred to as an "ePDCCH determination flag"). In the transmitting step, the eNB 200 transmits the ePDCCH determination flag at a specific position in the ePDCCH region. In the specifying step, the UE 100 receives the ePDCCH determination flag in the ePDCCH region and thereafter, specifies the ePDCCH region according to a position of the ePDCCH determination flag.

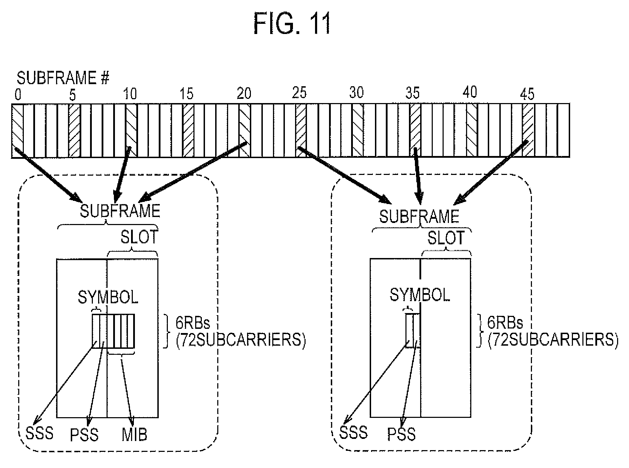

Fig. 11 is a diagram for describing the operation patterns 1 and 2 according to the first embodiment. Fig. 11 illustrates a configuration of a PSS, an SSS, and an MIB included in a subframe.

As illustrated in Fig. 11, a frequency band in which the PSS, the SSS, and the MIB are received is defined as six resource blocks in a center of a carrier. The PSS is mapped to the last OFDM symbol of a first-half slot per five subframes. The SSS is mapped to a second OFDM symbol to the last OFDM symbol of the same slot as the PSS (that is, immediately before the PSS). The MIB is mapped to four OFDM symbols from the head of a second-half slot, per 10 subframes (1 radio frame). In each subframe, the CRS is mapped to a distributed resource element.

In the operation pattern 1, the eNB 200 transmits the MIB including the ePDCCH identification information identifying radio resources set as the ePDCCH region. The UE 100 which is in an idle state receives the MIB and specifies the radio resources identified by the ePDCCH identification information included in the MIB as the ePDCCH region. In the operation pattern 1, the ePDCCH identification information includes identification information of frequency resources set as the ePDCCH region and identification information of time resources set as the ePDCCH region. The identification information of frequency resources may be, for example, a resource block number. The identification information of times resources is, for example, a radio frame number or a subframe number.

In operation pattern 2, the eNB 200 transmits a PSS/SSS including a cell ID and a CRS mapped according to the cell ID. The UE 100 receives the PSS/RSS or the CRS, and specifies radio resources calculated from the cell ID obtained by the PSS/SSS or the CRS as an ePDCCH region.

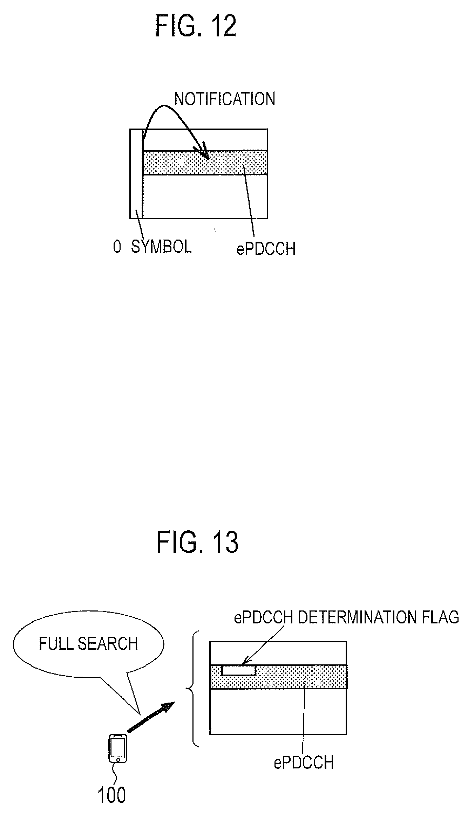

Fig. 12 is a diagram for describing the operation pattern 3 according to the first embodiment.

As illustrated in Fig. 12, the eNB 200 transmits the ePDCCH identification information in a head symbol (0-th symbol) of a subframe in which the ePDCCH region is set. The UE 100 receives the ePDCCH identification information transmitted in the head symbol, and thereafter, specifies radio resources identified by the ePDCCH identification information as an ePDCCH region. In the operation pattern 3, the ePDCCH identification information includes identification information of frequency resources set as the ePDCCH region. The identification information of frequency resources may be, for example, a resource block number.

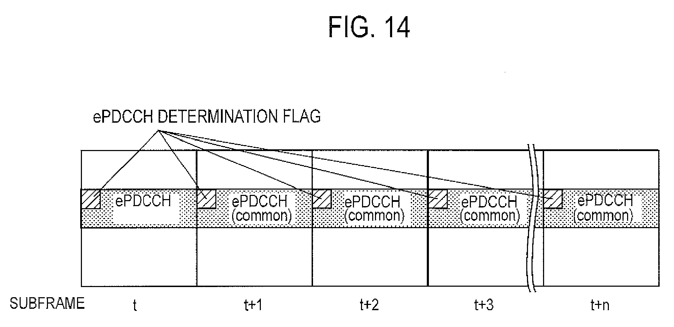

Figs. 13 and 14 are diagrams for describing the operation pattern 4 according to the first embodiment.

As illustrated in Fig. 13, the eNB 200 transmits the ePDCCH determination flag at a specific position in the ePDCCH region. The ePDCCH determination flag is, for example, a previously defined signal sequence. The UE 100 detects the ePDCCH determination flag in the ePDCCH region through full search and thereafter, specifies the ePDCCH region according to a position of the ePDCCH determination flag. As illustrated in Fig. 14, one ePDCCH determination flag may be configured in a plurality of subframes.

### [Second embodiment]

The second embodiment will be described while focusing on the differences from the first embodiment.

In the first embodiment, in particular, there is no description on content of the downlink control signal transmitted in the ePDCCH region.

In the second embodiment, a downlink control signal transmitted in an ePDCCH region is a downlink control signal that is common in a cell (hereinafter, referred to as a "common downlink control signal"). Also, thereinafter, an ePDCCH region for transmitting the common downlink control signal is referred to as a "common ePDCCH region". In the second embodiment, the common ePDCCH region is an ePDCCH region for transmitting only the common downlink control signal.

As described above, a plurality of UEs 100 can share radio resources set as the common ePDCCH region by setting the common ePDCCH region, thereby improving use efficiency of the radio resources.

The common downlink control signal includes, for example, system information (SI) and paging information. With respect to the SI, the same information is to be transmitted to all UEs 100 in a cell at the same timing and the all UEs 100 in the cell need to receive the same information. The SI includes information related to random access. With respect to the paging information, the same information is to be transmitted to the all UEs 100 in the cell at the same timing but only a UE 100 which is a paging target may receive the same information.

In the second embodiment, it is preferable to notify a UE 100 of the common ePDCCH region by the operation pattern 1 described in the first embodiment. Specifically, the eNB 200 transmits an MIB including ePDCCH identification information identifying radio resources set as a common ePDCCH region. The UE 100 receives the MIB and specifies the radio resources identified by the ePDCCH identification information included in the MIB as the common ePDCCH region. The eNB 200 may transmit an offset which can specify a position of the common ePDCCH region by being combined with the cell ID as the ePDCCH identification information by the MIB.

Alternatively, the same operation as the operation pattern 2 described in the first embodiment may be applied, instead of notification by the MIB. Specifically, the eNB 200 transmits a synchronization signal including the cell ID or a reference signal mapped according to the cell ID. The UE 100 specifies the cell ID from the synchronization signal or the reference signal, and specifies radio resources calculated from the cell ID as the ePDCCH region. For example, a certain cell ID region (for example, sequence A000 to AFFF) is previously defined as an offset zero, and a certain cell ID region (for example, sequence B000 to BFFF) is previously defined as an offset 1. The UE 100 specifies a position of the common ePDCCH region by an offset corresponding to a relevant cell ID.

### [Third embodiment]

The third embodiment will be described while focusing on the differences from the first embodiment and the second embodiment.

In the third embodiment, the eNB 200 sets an individual ePDCCH region for transmitting a downlink control signal (hereinafter, referred to as an "individual downlink control signal") of each UE 100, in addition to the common ePDCCH region. That is, the third embodiment is an embodiment of subdividing an ePDCCH region.

### (Setting pattern of ePDCCH region)

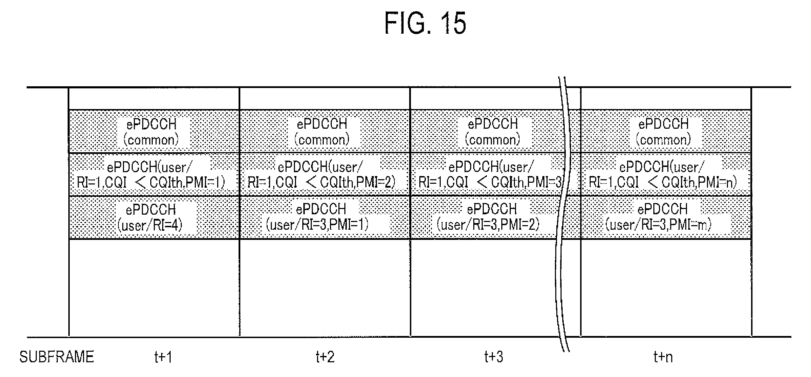

Figs. 15 to 17 are diagrams for describing a setting pattern of an ePDCCH region according to a third embodiment.

As illustrated in Fig. 15, the eNB 200 sets an individual ePDCCH region, in addition to a common ePDCCH region. The common ePDCCH region (common) is an ePDCCH region for transmitting a common downlink control signal. The individual ePDCCH region (user) is an ePDCCH region for transmitting an individual downlink control signal. The individual downlink control signal includes, for example, downlink control information (DCI) and an RRC message.

In the third embodiment, the individual ePDCCH region includes a plurality of sub-regions resulting from division according to an error tolerance required for a UE 100 that is a transmission destination of the individual downlink control signal. The error tolerance required for the UE 100 is determined by communication environment of the UE 100. For example, a UE 100 located at a cell edge requires a high error tolerance. In this regard, a UE 100 in the vicinity of a cell center requires a low error tolerance. The error tolerance required by the UE 100 is specified by feedback information from the UE 100. Examples of the feedback information include a CQI (Channel Quality Indicator), a PMI (Precoding Matrix Indicator), and an RI (Rank Indicator).

The eNB 200 allocates an individual ePDCCH to the UE 100, based on the feedback information from the UE 100 which is in a state (connected state) in which a connection with its own cell is established.

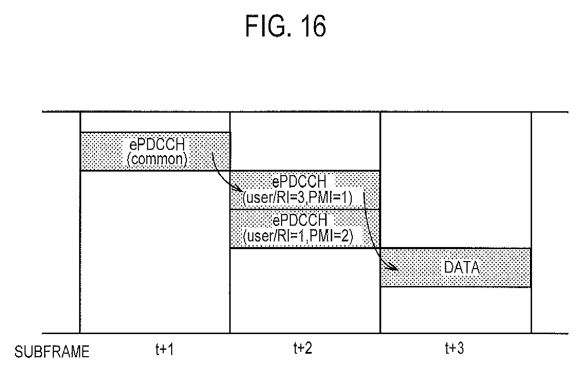

As illustrated in Fig. 16, the eNB 200 transmits information indicating an individual ePDCCH region allocated to the UE 100 to the UE 100 in a common ePDCCH region. Specifically, the eNB 200 includes the information indicating the individual ePDCCH region allocated to the UE 100 in a common downlink control signal. Also, the eNB 200 transmits the information indicating a PDSCH region (user data region) allocated to the UE 100 to the UE 100 in the individual ePDCCH region. Specifically, the eNB 200 includes the information indicating the PDSCH region allocated to the UE 100 in the individual downlink control signal (DCI).

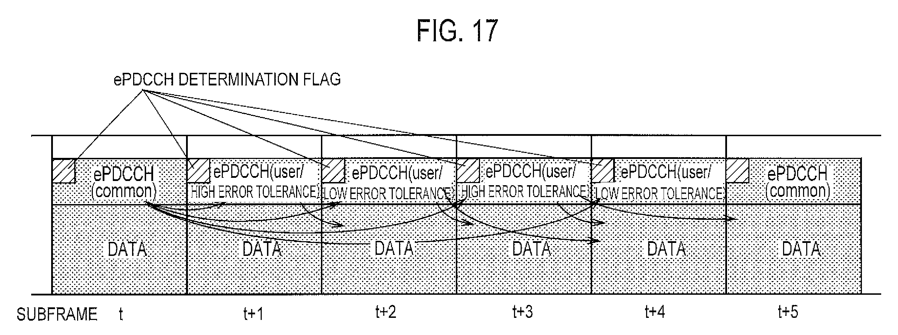

In Figs. 15 and 16, it is assumed that the common ePDCCH region and the individual ePDCCH region are divided in a frequency direction. However, as illustrated in Fig. 17, the common ePDCCH region and the individual ePDCCH region may be divided in a time direction. In Fig. 17, the common ePDCCH region and the individual ePDCCH region are set to different subframes.

### (ePDCCH region notification method with respect to neighboring eNB)

An eNB 200-1 which manages a first cell sets a common ePDCCH region and/or an individual ePDCCH region. The eNB 200-1 transmits ePDCCH information related to the common ePDCCH region and/or the individual ePDCCH region to an eNB 200-2 which manages a second cell adjacent to the first cell. The ePDCCH information is transmitted on an X2 interface. Alternatively, the ePDCCH information may be transmitted on an S1 interface. The eNB 200-2 transmits the ePDCCH information.

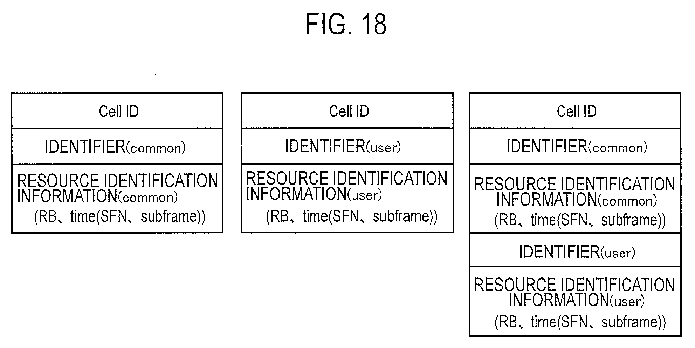

Fig. 18 is a diagram for describing a configuration example 1 of ePDCCH information according to a third embodiment.

As illustrated in Fig. 18, the ePDCCH information includes an identifier (cell ID) of the first cell which sets the common ePDCCH region and the individual ePDCCH region, resource identification information of radio resources set as the common ePDCCH region, and resource identification information of radio resources set as the individual ePDCCH region. The resource identification information includes identification information of frequency resources and identification information of time resources. The identification information of frequency resources may be, for example, a resource block number. The identification information of times resources is, for example, a radio frame number or a subframe number.

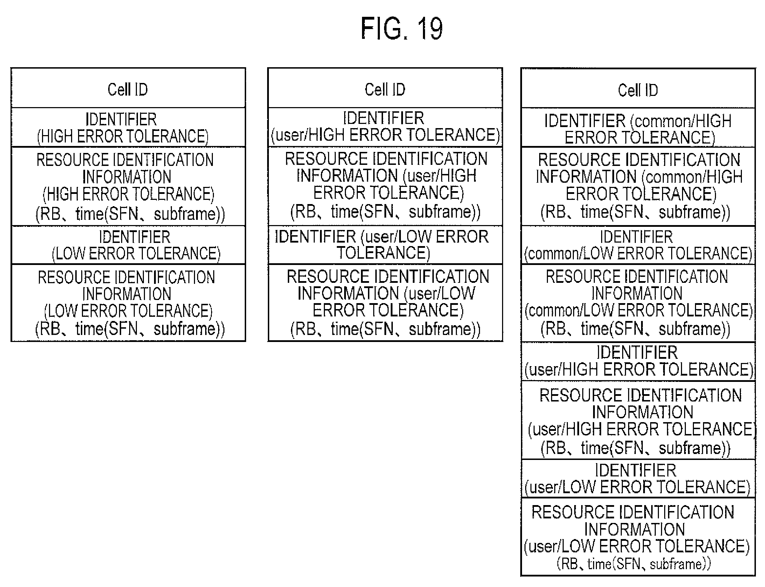

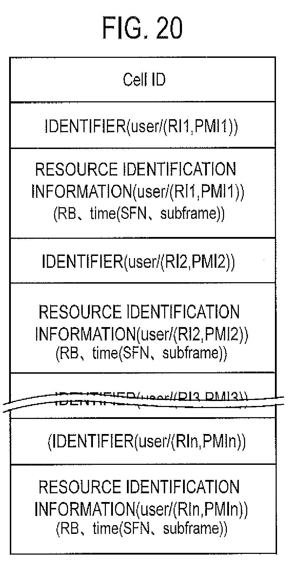

Figs. 19 and 20 are diagrams for describing a configuration example 2 of ePDCCH information according to a third embodiment.

As illustrated in Fig. 19, the ePDCCH information includes an identifier (cell ID) of the first cell which sets the common ePDCCH region and the individual ePDCCH region, resource identification information of radio resources set as the common ePDCCH region, and resource identification information of radio resources set as the individual ePDCCH region. The configuration example 2 differs from the above-described configuration 1, in that information indicating a required error tolerance is associated with the resource identification information. As illustrated in Fig. 20, information indicating details of a required error tolerance may be associated with the resource identification information

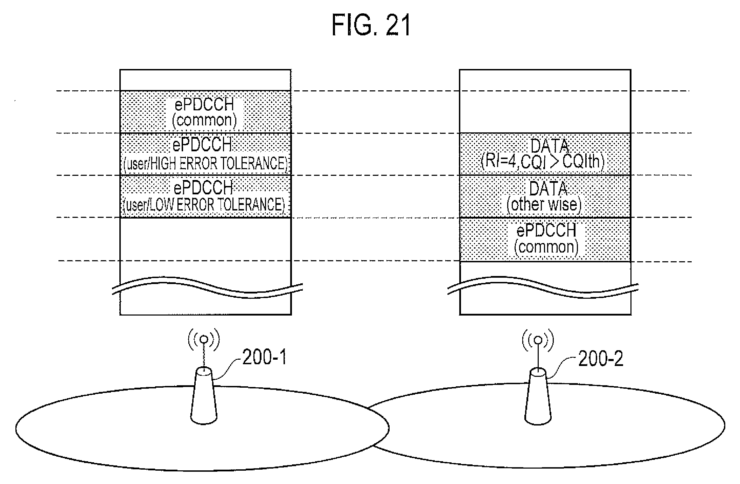

Fig. 21 is a diagram for describing a utilization example of ePDCCH information according to a third embodiment.

As illustrated in Fig. 21, there are disposed an eNB 200-1 which manages a first cell, and an eNB 200-2 which manages a second cell adjacent to the first cell. Each eNB 200 transmits ePDCCH information on a common ePDCCH region and an individual ePDCCH region, which are set by its own cell, to another eNB 200. In addition, each eNB 200 sets radio resources, which do not overlap a common ePDCCH region and an individual ePDCCH region set by the another eNB 200-1, as a common ePDCCH region for its own cell on the basis of the received ePDCCH information. Therefore, it is possible to avoid interference of the common ePDCCH region and successfully transmit a common downlink control signal to each cell.

In the third embodiment, each eNB 200 may perform allocation of a PDSCH region (user data region) in consideration of an error tolerance set to a neighboring cell on the basis of the received ePDCCH information.

For example, since an individual ePDCCH region (low error tolerance region), in which an error tolerance required for the eNB 200-1 (neighboring cell) is set to be low, is a region that is hardly subjected to interference, the eNB 200-2 performs normal PDSCH allocation with respect to radio resources corresponding to the individual ePDCCH region.

Meanwhile, since an individual ePDCCH region (high error tolerance region), in which an error tolerance required for the eNB 200-1 (neighboring cell) is set to be high, is a region that is easily subjected to interference, the eNB 200-2 allocates a PDSCH of the UE 100 having a low required error tolerance in its own cell with respect to radio resources corresponding to the individual ePDCCH region. Therefore, it is possible to avoid interference of the individual ePDCCH region, and the eNB 200-1 can successfully transmit an individual downlink control signal.

Each eNB 200 may update the common ePDCCH region and/or the individual ePDCCH region, which are set in its own cell. For example, each eNB 200 updates radio resources set as the common ePDCCH region and/or updates radio resources set as the individual ePDCCH region. When updating setting of the common ePDCCH region and/or the individual ePDCCH region, each eNB 200 may transmit ePDCCH information indicating the common ePDCCH region and/or the individual ePDCCH region after updating to another eNB 200.

### [Fourth embodiment]

The fourth embodiment will be described while focusing on the differences from the first embodiment to the third embodiment.

In the first embodiment to the third embodiment, in particular, there is no description on an updating method of an ePDCCH region.

In the fourth embodiment, the eNB 200 updates setting of an ePDCCH region, according to a change in the number of UEs 100 accommodated in its own cell or a change in an error tolerance required for the UE 100 accommodated in its own cell. In the fourth embodiment, updating of the individual ePDCCH region is mainly assumed, but the common ePDCCH region may be updated.

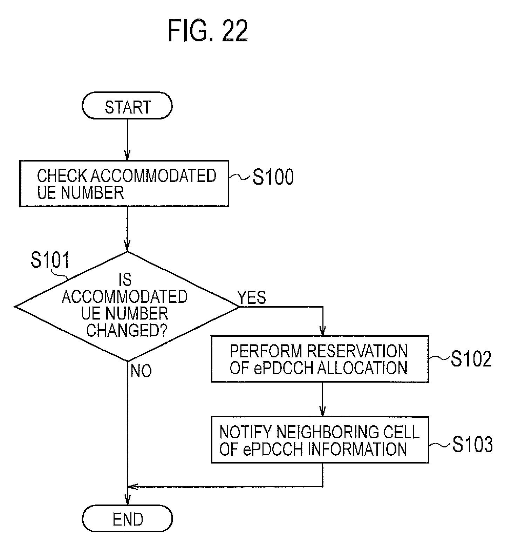

Fig. 22 is a flowchart of an updating method 1 of an ePDCCH region according to a fourth embodiment.

As illustrated in Fig. 22, in step S100, an eNB 200 checks the number of UEs 100 accommodated in its own cell (hereinafter, referred to as an accommodated UE number")In step S101, the eNB 200 determines whether the accommodated UE number is changed. When the accommodated UE number is changed (step S101: Yes), in step S102, the eNB 200 updates radio resources allocated as an ePDCCH region. Then, in step S103, the eNB 200 transmits ePDCCH information related to the ePDCCH region after updating to a neighboring eNB 200.

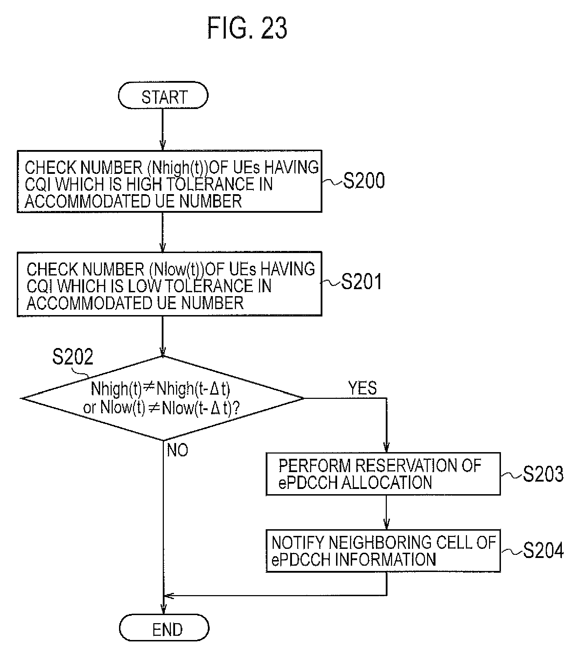

Fig. 23 is a flowchart of an updating method 2 of an ePDCCH region according to a fourth embodiment.

As illustrated in Fig. 23, in step S200, an eNB 200 checks the number of UEs 100 of which the required error tolerance is high (hereinafter, referred to as a "high error accommodated UE number") among UEs 100 accommodated in its own cell. In step S201, the eNB 200 checks the number of UEs 100 of which the required error tolerance is low (hereinafter, referred to as a "low error accommodated UE number") among the UEs 100 accommodated in its own cell. In step S202, the eNB 200 determines whether the high error accommodated UE number or the low error accommodated UE number is changed. When the high error accommodated UE number or the low error accommodated UE number is changed (step S202: Yes), in step S203, the eNB 200 updates radio resources allocated as an ePDCCH region. Then, in step S204, the eNB 200 transmits ePDCCH information related to the ePDCCH region after updating to a neighboring eNB 200.

### [Fifth embodiment]

The fifth embodiment will be described while focusing on the differences from the first embodiment to the fourth embodiment.

In the first embodiment to the fourth embodiment, it is assumed that the eNB 200 transmits the ePDCCH information to a neighboring eNB 200 in the case of initially setting or updating the ePDCCH region in its own cell.

In the fifth embodiment, the eNB 200 transmits ePDCCH information a neighboring eNB 200 in a handover procedure. Specifically, in the fifth embodiment, the eNB 200-1 receives a request for a handover of a UE 100 from a neighboring cell to its own cell from an eNB 200-2. The eNB 200-1 transmits the ePDCCH information the eNB 200-2 when responding to the request for the handover. Then, the eNB 200-2 notifies the UE 100 of the ePDCCH information when transmitting an instruction for a handover to a neighboring cell to the UE 100.

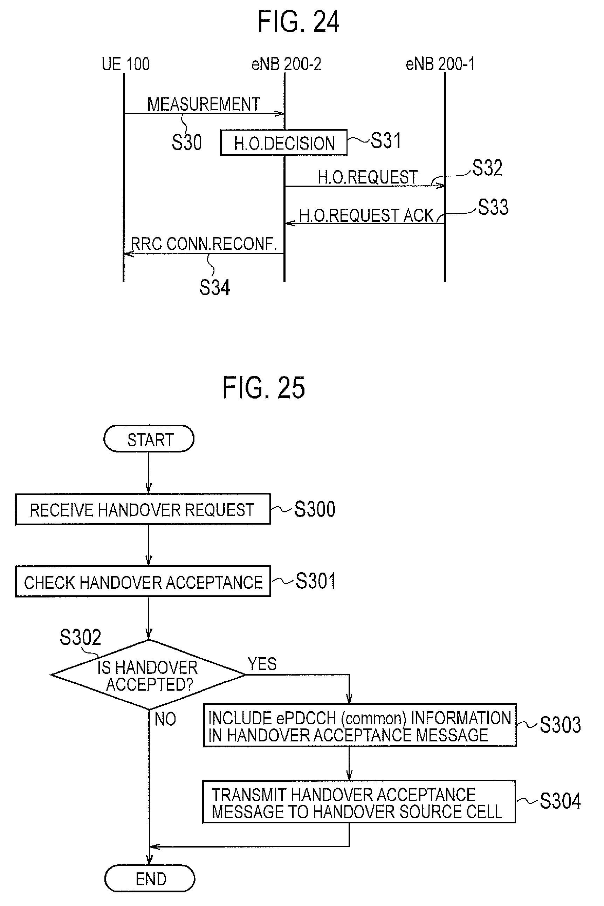

Fig. 24 is a sequence diagram illustrating a general handover procedure.

As illustrated in Fig. 24, in step S30, a UE 100 which in a connected state to a cell of an eNB 200-2 transmits a measurement report related to a neighboring cell to the eNB 200-2. In step S31, the eNB 200-2 which has received the measurement report determines a handover of the UE 100 to a cell of an eNB 200-1 on the basis of the measurement report. In step S32, the eNB 200-2 which has determined the handover transmits a handover request for requesting preparation for the handover to the eNB 200-1. In step S33, the eNB 200-1 which has received the handover request r transmits a response (Ack) indicating acceptance of the handover request to the eNB 200-2. The eNB 200-2 which has received the response transmits a handover instruction for instructing a handover to a cell of the eNB 200-1 along with RRC setting information to UE 100.

Fig. 25 is an operation flowchart of an eNB 200-1 according to a fifth embodiment. The present flowchart is performed in steps S32 and S33 of Fig. 24.

As illustrated in Fig. 25, in step S300, the eNB 200-1 receives a handover request. In step S301, the eNB 200-1 determines whether the handover request is accepted. When the handover request is accepted (step S302: Yes), in step S303, the eNB 200-1 includes ePDCCH information for its own cell in a message representing acceptance of the handover request. Then, in step S304, the eNB 200-1 transmits the message including the ePDCCH information to an eNB 200-2.

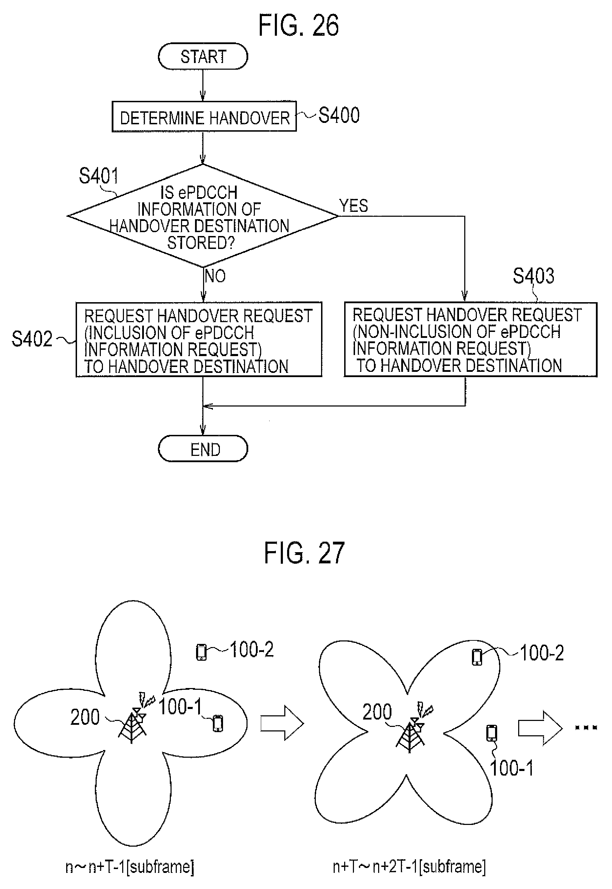

It is noted that, when a handover source cell stores ePDCCH information of a handover destination cell, it is not always necessary to include the ePDCCH information in a handover response message. Fig. 26 is an operation flowchart of an eNB 200-2 according to a fifth embodiment. The present flowchart is performed in steps S31 and S32 of Fig. 24.

As illustrated in Fig. 26, in step S400, the eNB 200-2 determines a handover of a UE 100 to a cell of an eNB 200-1. In step S401, the eNB 200-2 determines whether ePDCCH information for the cell of the eNB 200-1 is stored. When the ePDCCH information is not stored (step S401: No), in step S402, the eNB 200-2 includes a transmission request of the ePDCCH information in a handover request and transmits the handover request to the eNB 200-1. In this regard, when the ePDCCH information is stored (step S401: Yes), in step S403, the eNB 200-2 transmits the handover request to the eNB 200-1 without including the transmission request of the ePDCCH information in the handover request. In the present flowchart, the eNB 200-1 which has received the handover request may not include the ePDCCH information in a handover response message when it is preferable that the transmission request of the ePDCCH information is included in the handover request.

### [Sixth embodiment]

The sixth embodiment will be described while focusing on the differences from the first embodiment to the fifth embodiment.

A common downlink control signal transmitted in a common ePDCCH region needs to be received by all UEs 100 in a cell. Therefore, in the sixth embodiment, there will be described a method of transmitting a common downlink control signal in a common ePDCCH region.

Fig. 27 is a diagram for describing an operation pattern 1 of an eNB 200 according to a sixth embodiment.

As illustrated in Fig. 27, the eNB 200 transmits a common downlink control signal, while changing a transmission directivity applied to a common ePDCCH region. For example, the eNB 200 changes the transmission directivity applied to the common ePDCCH region, by making precoder matrices (transmission antenna weight) applied to transmission of the common downlink control signal different for subframes. Therefore, even a UE 100 in a cell edge can successfully receive the common downlink control signal. The eNB 200 may adjust a period at which the transmission directivity is changed, in consideration of a channel status of a UE 100 in its own cell. For example, when a variation in the channel status of the UE 100 in its own cell is large, the period is set to be short, and when a variation in the channel status of the UE 100 in its own cell is small, the period is set to be long. The eNB 200 may help power saving in the UE 100 or the like, by notifying the UE 100 of the period.

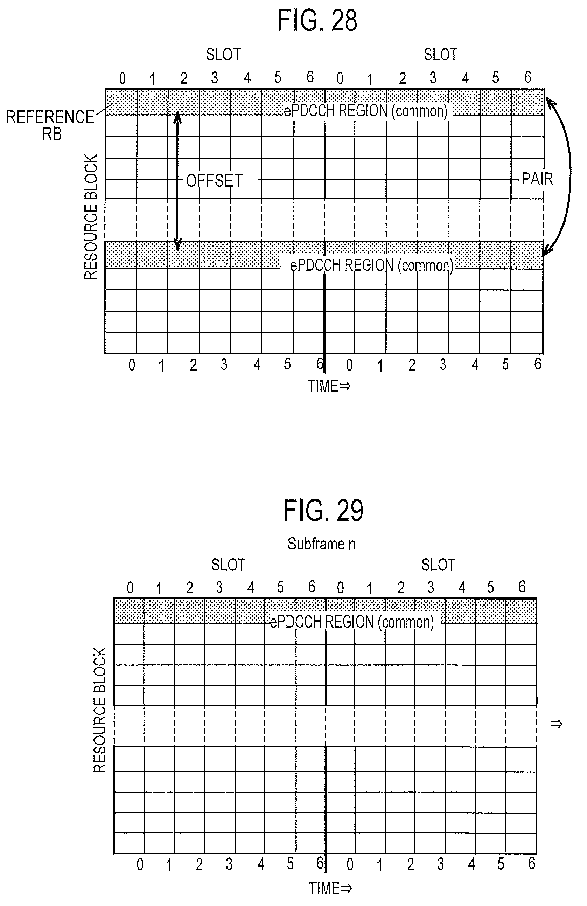

Fig. 28 is a diagram for describing an operation pattern 2 of an eNB 200 according to a sixth embodiment.

As illustrated in Fig. 28, the eNB 200 sets, as a common ePDCCH region, radio resources consisting of a first resource block (reference resource block) and a second resource block disposed spaced apart from the first resource block in a frequency direction, in at least one of a plurality of subframes. Therefore, it is possible to obtain frequency diversity effect by setting a pair of frequency resources therebetween which an offset is provided as the common ePDCCH region. The eNB 200 notifies the UE 100 of resource identification information identifying the pair of frequency resources by an MIB. Alternatively, it may be possible to notify the UE 100 of information indicating the reference frequency resource (reference resource block) and the offset by the MIB.

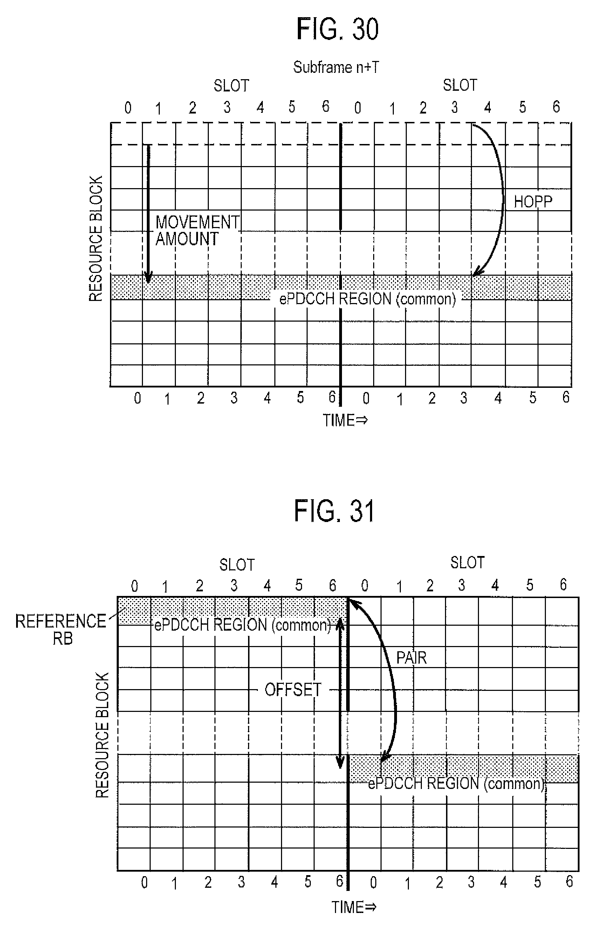

Figs. 29 and 30 are diagrams for describing an operation pattern 3 of an eNB 200 according to a sixth embodiment.

As illustrated in Figs. 29 and 30, the eNB 200 changes resource blocks set as a common ePDCCH region such that the common ePDCCH region is subjected to frequency hopping for each subframe by a predetermined hopping pattern. By adopting frequency hopping, it is possible to obtain frequency diversity effect. The eNB 200 notifies the UE 100 of information indicating the hopping period and the hopping pattern by the MIB.

Fig. 31 is a diagram for describing an operation pattern 4 of an eNB 200 according to a sixth embodiment.

As illustrated in Fig. 31, a subframe includes a first slot and a second slot which are divided in a time direction. The eNB 200 makes resource blocks to be set as the common ePDCCH region different in the first slot and the second slot. That is, a resource block set as the common ePDCCH region in the second slot differs from a resource block (reference resource block) set as the common ePDCCH region in the first slot. Therefore, it is possible to obtain frequency diversity effect. The eNB 200 notifies the UE 100 of information indicating resource blocks set as the common ePDCCH region in each of the first slot and the second slot by the MIB. Alternatively, it may be possible to notify the UE 100 of information indicating a reference resource block and an offset by the MIB.

Note that, in any one of the operation patterns 1 to 4 according to the sixth embodiment, the eNB 200 may notify a neighboring eNB 200 of the same information as information to be notified to the UE 100 as ePDCCH information by the MIB.

### [Other embodiments]

The above-embodiments may be implemented individually and may also be implemented in a combination of two or more of embodiments.

The individual ePDCCH region is not limited to a case of being used with the common ePDCCH region, and may be used with a conventional PDCCH. For example, in a subframe including a conventional PDCCH region, the individual ePDCCH region may be set as a user data region (PDSCH region). In this case, it makes it possible to transmit a common downlink control signal in a conventional PDCCH region and transmit the common downlink control signal in the individual ePDCCH region.

In addition, in the above-described each embodiment, the LTE system as one example of a cellular system is described; however, the present invention is not limited to the LTE system, and the present invention may be applied to a communication system other than the LTE system.

In addition, the entire content of Japanese Patent Application No. 2013-133656 (filed on June 26, 2013) and Japanese Patent Application No. 2013-133660 (filed on June 26, 2013) is incorporated in the present specification by reference.

### INDUSTRIAL APPLICABILITY

As described above, the communication control method according to the present invention is capable of handling an ePDCCH region appropriately and thus it is useful in a mobile communication filed.

## Claims

1. A communication control method for use in a mobile communication system in which a radio frame is configured by a plurality of subframes divided in a time direction and each of the plurality of subframes includes a plurality of resource blocks divided in a frequency direction, the communication control method comprising:
a setting step of setting, by a first base station which manages a first cell, radio resources consisting of a portion of resource blocks of the plurality of resource blocks as an ePDCCH region for transmitting a downlink control signal in the first cell, in at least one of the plurality of subframes;
a transmitting step of transmitting, by the first base station, ePDCCH information indicating the ePDCCH region to a second base station which manages a second cell; and
a receiving step of receiving, by the second base station, the ePDCCH information.

2. The communication control method according to claim 1, wherein, in the transmitting step, when updating setting of the ePDCCH region, the first base station transmits the ePDCCH information indicating the ePDCCH region after updating to a second base station.

3. The communication control method according to claim 1, wherein the ePDCCH information includes resource identification information of radio resources set as the ePDCCH region.

4. The communication control method according to claim 1, wherein the ePDCCH region includes a common region for transmitting a common downlink control signal in the first cell, and
the ePDCCH information includes resource identification information of radio resources set as the common region.

5. The communication control method according to claim 1, wherein the ePDCCH region includes an individual region for transmitting a downlink control signal for an individual user terminal, and
the ePDCCH information includes resource identification information of radio resources set as the individual region.

6. The communication control method according to claim 1, wherein the ePDCCH region includes a plurality of sub-regions resulting from division according to error tolerance required for a user terminal that is a transmission destination of the downlink control signal, and
the ePDCCH information includes resource identification information of each of the plurality of sub-regions.

7. The communication control method according to claim 2, further comprising a step of updating, by the first base station, setting of the ePDCCH region, according to a change in a number of user terminals accommodated in the first cell or a change in an error tolerance required for a user terminal accommodated in the first cell.

8. The communication control method according to claim 1, further comprising a step of setting, by the second base station, an ePDCCH region for transmitting a downlink control signal in the second cell on the basis of the ePDCCH information.

9. The communication control method according to claim 1, further comprising a step of receiving, by the first base station, a request for a handover of a user terminal from the second cell to the first cell from the second base station,
wherein, in the transmitting step, when responding to the request for the handover, the first base station transmits the ePDCCH information to the second base station.

10. The communication control method according to claim 9, further comprising a step of notifying, by the second base station, the user terminal of the ePDCCH information when transmitting an instruction of a handover to the first cell to the user terminal.

11. A communication control method for use in a mobile communication system in which a radio frame is configured by a plurality of subframes divided in a time direction and each of the plurality of subframes includes a plurality of resource blocks divided in a frequency direction, the communication control method comprising:
a setting step of setting, by a base station which manages a cell, radio resources consisting of a portion of resource blocks of the plurality of resource blocks as an ePDCCH region for transmitting a downlink control signal in the cell, in at least one of the plurality of subframes;
a transmitting step of transmitting, by the base station, identification information associated with the ePDCCH region; and
a specifying step of specifying, by a user terminal which is in an idle state in the cell, the ePDCCH region on the basis of the identification information after reception of the identification information.

12. The communication control method according to claim 11, further comprising an establishing step of establishing, by the user terminal, a connection with the cell by receiving the downlink control signal transmitted in the ePDCCH region.

13. The communication control method according to claim 11, wherein the identification information is information identifying radio resources set as the ePDCCH region,
in the transmitting step, the base station transmits system information including the identification information, and
in the specifying step, the user terminal specifies radio resources identified by the identification information as the ePDCCH region after receiving the identification information included in the system information.

14. The communication control method according to claim 11, wherein the identification information is information identifying the cell,
in the transmitting step, the base station transmits a synchronization signal including the identification information or a reference signal mapped according to the identification information, and
in the specifying step, the user terminal specifies radio resources calculated from the identification information obtained by the synchronization signal or the reference signal as the ePDCCH region.

15. The communication control method according to claim 11, wherein the identification information is information identifying radio resources set as the ePDCCH region,
in the transmitting step, the base station transmits the identification information in a head symbol of a subframe in which the ePDCCH region set, and
in the specifying step, the user terminal specifies radio resources identified by the identification information as the ePDCCH region after receiving the identification information transmitted in the head symbol.

16. The communication control method according to claim 11, wherein the identification information is a flag for specifying the ePDCCH region,
in the transmitting step, the base station transmits the identification information at a specific position in the ePDCCH region, and
in the specifying step, the user terminal specifies the ePDCCH region according to a position of the identification information after receiving the identification information in the ePDCCH region.

17. A communication control method for use in a mobile communication system in which a radio frame is configured by a plurality of subframes divided in a time direction and each of the plurality of subframes includes a plurality of resource blocks divided in a frequency direction, the communication control method comprising:
a setting step of setting, by a base station which manages a cell, radio resources consisting of a portion of resource blocks of the plurality of resource blocks as a common ePDCCH region for transmitting a common downlink control signal in the cell, in at least one of the plurality of subframes.

18. The communication control method according to claim 17, wherein the common ePDCCH region is an ePDCCH region for transmitting only the common downlink control signal in the cell.

19. The communication control method according to claim 17, further comprising:
a transmitting step of transmitting, by the base station, a master information block including identification information associated with the common ePDCCH region; and
a specifying step of specifying, by a user terminal which is in an idle state in the cell, the common ePDCCH region on the basis of the identification information after reception of the identification information included in master information block.

20. The communication control method according to claim 17, further comprising a transmitting step of transmitting, by the base station, the common downlink control signal in the cell, while changing a transmission directivity applied to the common ePDCCH region.

21. The communication control method according to claim 17, wherein, in the setting step, the base station sets, as the common ePDCCH region, radio resources consisting of a first resource block and a second resource block disposed spaced apart from the first resource block in a frequency direction, in at least one of the plurality of subframes.

22. The communication control method according to claim 17, wherein, in the setting step, the base station changes resource blocks set as the common ePDCCH region such that the common ePDCCH region is subjected to frequency hopping for each subframe by a predetermined hopping pattern.

23. The communication control method according to claim 17, wherein each of the plurality of subframes includes a first slot and a second slot divided in a time direction, and
in the setting step, the base station makes resource blocks to be set as the common ePDCCH region different in the first slot and the second slot.
